# EUROPEAN PATENT APPLICATION

(11) **EP 2 559 969 A2**
(43) Date of publication of application: **20.02.2013**
(21) Application number: 12180177.3
(22) Date of filing: 10.08.2012
(51) Int. Cl.: G01D 4/00

(54) **Meter having a fiber optic interface**

(30) Priority: 18.08.2011 US 201113212645
(71) Applicant: General Electric Company, Schenectady, NY 12345 (US)
(72) Inventor: Ree, Bradley Richard, Atlanta, GA 30339 (US)
(74) Representative: Illingworth-Law, William Illingworth

(57) **Abstract**

Described herein are embodiments of meters, systems and methods of a meter having a fiber optic interface. One embodiment of the meter (106) comprises one or more metrology sensors (402); a non-isolated power supply (414); a processor (404); and a network interface (408) having a section of fiber optic cable (302), wherein the processor (404) is operably connected to the one or more metrology sensors (402) and the network interface (408) having a section of fiber optic cable (302), wherein the non-isolated power supply (414) provides any power used by the processor (404), the one or more metrology sensors (402), and the network interface (408), and wherein the section of fiber optic cable (302) is used to connect the meter (106) to a network (110).

## Description

### BACKGROUND OF THE INVENTION

Energy revenue meters now, in many instances, have intelligence built into them in the form of processors. These so-called "smart meters" are capable of communications over a network with other meters, computing devices and systems. In some instances, these communications occur over wired (including fiber optic) networks. Heretofore, most smart meters used isolated power supplies to electrically isolate the meter's electronics from the metered energy. Non-isolated power supplies such as potential transformers or current transformers are used for metering inputs to metrology sensors. Therefore, in many instances two types of power supplies have been required in smart meters. Furthermore, advances in fiber optic cable are enabling it to be extended to the home or premise, thus providing communications and entertainment over one or just a very few fibers. Smart meters can be configured to communicate over these fibers as well, if the meter is connected to the fiber, and such a connection can provide electrical isolation for the network from the meter.

Therefore, device, systems and methods are desired that overcome challenges present in the art, some of which are described above.

### BRIEF DESCRIPTION OF THE INVENTION

Described herein are embodiments of a meter having a fiber optic interface, systems utilizing such a meter and methods of use.

One embodiment of the meter comprises one or more metrology sensors; a non-isolated power supply; a processor; and a network interface having a section of fiber optic cable, wherein the processor is operably connected to the one or more metrology sensors and the network interface having a section of fiber optic cable, wherein the non-isolated power supply provides any power used by the processor, the one or more metrology sensors, and the network interface, and wherein the section of fiber optic cable is used to connect the meter to a network.

Another aspect of the present invention comprises a system. One embodiment of the system comprises a network and a meter. The meter is further comprised of one or more metrology sensors; a non-isolated power supply; a processor; and a network interface having a section of fiber optic cable, wherein the processor is operably connected to the one or more metrology sensors and the network interface having a section of fiber optic cable, wherein the non-isolated power supply provides any power used by the processor, the one or more metrology sensors, and the network interface, and wherein the section of fiber optic cable is used to connect the meter to the network.

In yet another aspect, a method is described. One embodiment of the method comprises connecting a meter to a network, wherein at least a section of the network comprises fiber optic cable. The meter is comprised of one or more metrology sensors; a non-isolated power supply; a processor; and a network interface. The processor is operably connected to the one or more metrology sensors and the network interface having a section of fiber optic cable, wherein the non-isolated power supply provides any power used by the processor, the one or more metrology sensors, and the network interface, and wherein the section of fiber optic cable is used to connect the meter to the network.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The accompanying drawings, which are incorporated in and constitute a part of this specification, illustrate embodiments and together with the description, serve to explain the principles of the methods and systems:
FIG. 1 is a single-line block diagram of a section of an exemplary utility distribution system;
FIG. 2 is an exemplary detailed illustration of a portion of a three-phase, four-wire (phases A, B, C and neutral, N) distribution system according to one embodiment of the present invention;
FIG. 3 illustrates an overview block diagram of a non-limiting embodiment of a meter that can be used to practice embodiments of the present invention;
FIG. 4 illustrates a block diagram of an entity capable of operating as meter electronics in accordance with one embodiment of the present invention; and
FIG. 5 is a flowchart illustrating the operations that may be taken for a method of practicing an embodiment of the present invention.

### DETAILED DESCRIPTION OF THE INVENTION

Before the present methods and systems are disclosed and described, it is to be understood that the methods and systems are not limited to specific synthetic methods, specific components, or to particular compositions. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other additives, components, integers or steps. "Exemplary" means "an example of" and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

The present methods and systems may be understood more readily by reference to the following detailed description of preferred embodiments and the Examples included therein and to the Figures and their previous and following description.

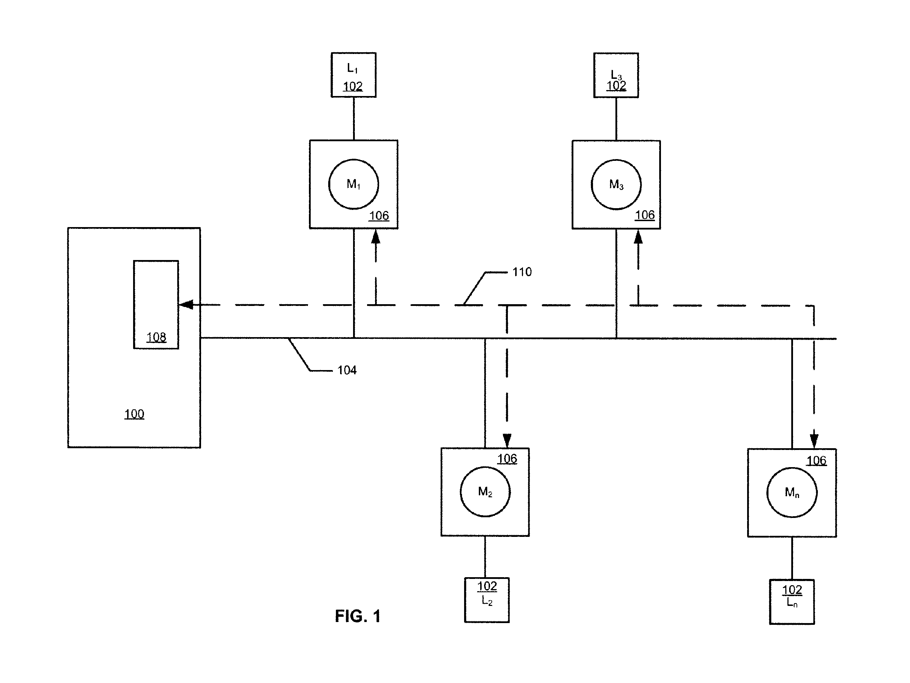

Referring to FIG. 1, an illustration of one type of system that would benefit from embodiments of the present invention is provided. FIG. 1 is a single-line block diagram of a section of an exemplary utility distribution system such as, for example, an electric distribution system. As shown in FIG. 1, a utility service is delivered by a utility provider 100 to various loads L₁-Lₙ 102 through a distribution system 104. In one aspect, the utility service provided can be electric power. Though shown in FIG. 1 as a single-line diagram, it is to be appreciated that the distribution system 104 can be comprised of single-phase and/or poly-phase components and be of varying voltage levels. Consumption and demand by the loads 102 can be measured at the load locations by revenue meters M₁-Mₙ 106. If an electric meter, the meters 106 can be single-phase or poly-phase electric meters, as known to one of ordinary skill in the art, depending upon the load 102. For example, the load can be single-phase and therefore the meter 106 can be single phase. Single-phase loads can be connected to different phases (e.g., phase A, phase B or phase C) of the distribution system 104. Similarly, for example, the load 102 can be a poly-phase load such as a three-phase load and the meter 106 can be a three-phase meter that meters the three phases serving the load 102.

In one aspect, the electric meter 106 is a smart meter as described herein and as known to one of ordinary skill in the art. Hereinafter, the specification will refer to the revenue meter 106 as a "meter," "electric meter," and/or "smart meter," where the terms can be used interchangeably. One non-limiting example of a smart meter is the GE I210+c meter as available from General Electric Company ("GE") (Schenectady, NY). Another non-limiting example of a smart meter is the GE SM3000 meter as also available from GE. While consumption or demand information is used by the utility provider 100 primarily for billing the consumer, it also can be used for other purposes including planning and profiling the utility distribution system. In some instances, utility providers 100 desire to electronically communicate with the meters 106 for numerous purposes including scheduling disconnection or connection of utility services to the loads 102, automatic meter reading (AMR), load shedding and load control, automatic distribution and smart-grid applications, outage reporting, providing additional services such as Internet, video, and audio, etc. As noted above, meters 106 can be configured to measure electrical parameters at the meter 106 location such as voltage, current, power factor, and the like. In many of these instances, the meters 106 can be configured to communicate with one or more computing devices 108 through a communications network 110, which can be wired (including fiber optic), wireless or a combination of wired and wireless, as known to one of ordinary skill in the art. In one aspect, the network 110 is an advanced metering infrastructure (AMI) network. AMI refers to systems that measure, collect and analyze energy usage, and interact with advanced devices such as electricity meters, gas meters, water meters, and the like through various communication media either on request (on-demand) or on pre-defined schedules. This infrastructure includes hardware, software, communications, consumer energy displays and controllers, customer associated systems, meter data management (NIDM) software, supplier and network distribution business systems, and the like. The network 110 between the measurement devices (e.g., meters 106) and business systems allows collection and distribution of information to customers, suppliers, utility companies and service providers. This enables these businesses to either participate in, or provide, demand response solutions, products and services. By providing information to customers, the system assists a change in energy usage from their normal consumption patterns, either in response to changes in price or as incentives designed to encourage lower energy usage use at times of peak-demand periods or higher wholesale prices or during periods of low operational systems reliability. In one aspect, the network 110 comprises at least a portion of a smart grid network. In one aspect, the network 110 utilizes one or more of one or more of a WPAN (e.g., ZigBee, Bluetooth), LAN/WLAN (e.g., 802.11n, microwave, laser, etc.), WMAN (e.g., WiMAX, etc.), WAN/WWAN (e.g., UMTS, GPRS, EDGE, CDMA, GSM, CDPD, Mobitex, HSDPA, HSUPA, 3G, etc.), RS232, USB, Firewire, Ethernet, wireless USB, cellular, OpenHAN, power line carrier (PLC), broadband over power lines (BPL), and the like.

In one aspect, meter 106 can comprise a network interface having a section of fiber optic cable that can be used to connect the meter 106 with the network 110 and to provide electrical isolation for the meter 106. The electrical isolation provided by the section of fiber optic cable enables a non-isolated power supply to be used in the meter 106.

In some instances, the utility 100 desires to communicate with one or more electrical devices 102 at a metered location. In one aspect, the network 110 can be used by the utility to communicate with the one or more electrical devices 102. For example, a utility may desire to control operational characteristics of loads (e.g. electrical devices) 102 by use of a demand response management system (DRMS). An exemplary DRMS can be implemented through the use of dedicated control systems to shed loads in response to a request by a utility 100 or based upon market price conditions. Services (e.g., lights, machines, air conditioning, etc.) can be reduced according to a preplanned hierarchical load prioritization scheme during the critical time frames. Generally, a DRMS can control or affect the operational characteristics of one or more electrical devices 102 found at a metered location. Such electrical devices can include, for example, one or more of a heating, ventilation and air conditioning (HVAC) unit, a water heater, lighting, a dish washer, a refrigerator, a washing machine, a dryer, an electric stove or oven, a microwave oven, a water pump, and the like. In various instances, the utility 100 can communicate with the electrical devices 102 by use of network 110 that can comprise all or part of a DRMS, an AMI (as described herein), a smart-grid implementation, an Internet connection, or combinations thereof. The network 110 media can be wired (including fiber optic), wireless, or combinations thereof. In various aspects, the utility 100 can adjust operational characteristics of one or more electrical devices 100. For example, adjusting the one or more operational characteristics of the electrical device 102 can comprise causing the electrical device 102 to draw higher current or operate at a higher voltage than its normal operating state or can comprise causing the electrical device 102 to draw lower current or operate at a lower voltage than its normal operating state. In one aspect, adjusting the one or more operational characteristics of the electrical device 102 can comprise cycling the electrical device on and off. Such cycling can occur at a specified frequency. In one aspect, adjusting the one or more operational characteristics of the electrical device 102 comprises preventing the electrical device 102 from operating or being energized for a defined period of time. In one aspect, the network 110 communicates with a meter 106, such as a smart meter, which in turn communicates either wirelessly or through a wired connection with the one or more electrical devices at the metered location. In one aspect, a radio within the meter 106 communicates wirelessly with one or more devices. In one aspect, the meter 106 communicates with the one or more electrical devices using one or more of a WPAN (e.g., ZigBee, Bluetooth), LAN/WLAN (e.g., 802.11n, microwave, laser, etc.), WMAN (e.g., WiMAX, etc.), WAN/WWAN (e.g., UMTS, GPRS, EDGE, CDMA, GSM, CDPD, Mobitex, HSDPA, HSUPA, 3G, etc.), RS232, USB, Firewire, Ethernet, wireless USB, cellular, OpenHAN, power line carrier (PLC), broadband over power lines (BPL), and the like. In other instances, the network 110 can communicate directly with the one or more electrical devices using, for example, the Internet, cellular telephone, wired telephone connections, wired cable television connections, and the like.

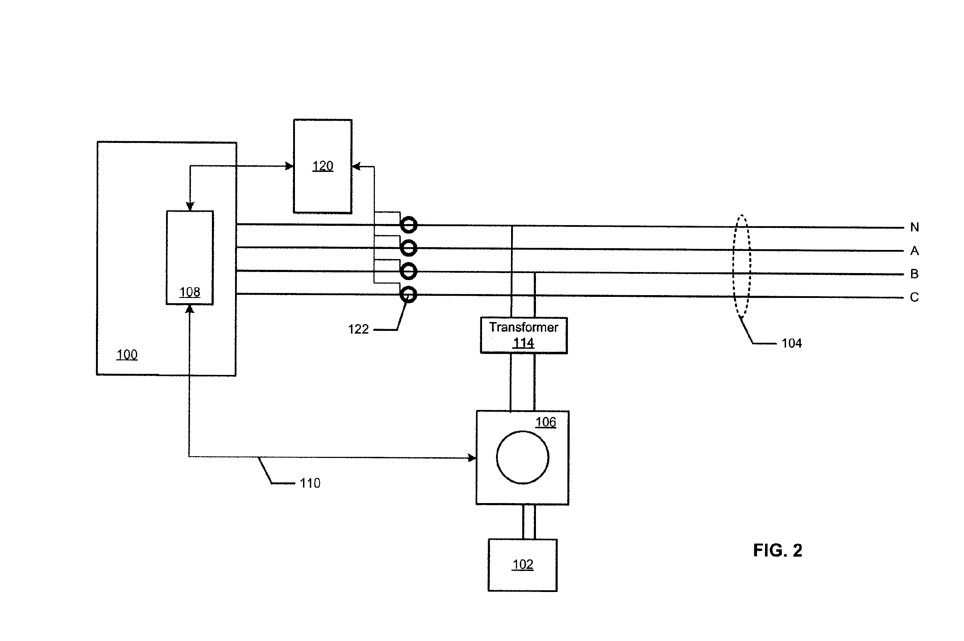

Referring now to FIG. 2, in some instances an electrical distribution system 104 may be a poly-phase system such as a three-phase, four-wire network, which supplies power-using feeders. Each of the feeder lines then branches into multiple circuits to power a plurality of local pole-mounted or pad-mounted transformers 114, which step the voltage down to final voltages of, for example, 120 or 240 volts phase-to-ground or phase-to-phase for delivery and metering at metered commercial and residential customer locations. Generally, residential customers can be connected to any one phase of the three-phase system using a single-phase meter and commercial customers can be connected to all the three phases using three-phase meter with a load control relay ("LCR") connected on any one of the phases. FIG. 2 is an exemplary detailed illustration of a portion of a three-phase, four-wire (phases A, B, C and neutral, N) distribution system according to one embodiment of the present invention. As shown in FIG. 2, distribution system 104 is comprised of three phase conductors (phases A, B and C) and a neutral (N) wire. In one aspect, each of three phases and the neutral are provided to each meter 106. In one aspect, the voltage provided at the meters 106 is stepped down by a transformer 114 to a level that can be used by the load 102 (e.g. 120/240, 277/480, and the like). The transformer 114 can be a single transformer, two or three single-phase transformers, or a single three-phase transformer, as needed to serve the load. FIG. 2 illustrates a single-phase load 102 served from phase B of the three-phase distribution system 104, though it is to be understood that embodiments of the present invention are equally applicable to poly-phase loads (and meters). As shown in FIG. 2, computing device 108 interfaces with meter 106 through network 110. For example, computing device 108 can communicate with meter 106 to cause meter 106 to adjust the operational characteristics of electrical device 102. As noted above, adjusting the one or more operational characteristics of the electrical device 102 can comprise cycling the electrical device on and off wherein such cycling can occur at a specified frequency, or preventing the electrical device 102 from operating. Network 110 can comprise DRMS, an AMI, the Internet, combinations thereof and the like. In various aspects, the network can be comprised of wired (including fiber optic) or wireless components, or combinations thereof. A section of fiber optic cable can be incorporated into the meter to provide a network interface. The section of fiber optic cable can be used to connect the meter to a fiber optic network such as fiber to the home (FTTH), fiber to the premises (FTTP), fiber to the curb (FTTC) networks, and the like, as have been and are continuing to be implemented. In one aspect, fiber optic section can be used with an opto-coupler to connect the meter with a wired (conductive) network such as those utilizing RS232, RS485, Ethernet, and the like.

Further comprising the system shown in FIG. 2 is a monitoring system 120. Monitoring system 120 is comprised of at least one or more sensors 122, wherein the sensors 122 are configured to and capable of detecting a change in at least one electrical parameter of one or more phases of a poly-phase electrical system 104 that provides electrical energy to the electrical device 102. In one aspect, monitoring system 120 comprises all or a portion of a supervisory control and data acquisition (SCADA) system. In another aspect, monitoring system 120 comprises all or a portion of a distribution management system (DMS). In another aspect, monitoring system 120 is a combination of all or portions of a SCADA system and a DMS. In one aspect, monitoring system 120 has a separate computing device (e.g., a SCADA processor); while in other aspects monitoring system 120 makes use of computing device 108 (which can serve as a SCADA processor). Monitoring system 120 can detect changes in at least one electrical parameter of one or more phases of a poly-phase electrical system 104 that provides electrical energy to the electrical device 102. In various aspects, sensors 122 can detect changes in at least one of voltage, current, resistance, frequency, capacitance, inductance, power factor, real power, reactive power and the like of the one or more phases of the poly-phase electrical system 104 that provides electrical energy to the electrical device 102. In one aspect, monitoring system 120 can further analyze signals received from the sensors 122. For example, in one instance the monitoring system 120 can perform a fast-Fourier transform (FFT) of the sensor signals to detect the affected electrical parameters. In one aspect, such analysis can be performed on a processor such as SCADA processor or computing device 108 described herein. In other aspects, monitoring system 120 can perform other frequency- or time-domain analyses on the sensor signals.

Computing device 108 can receive from monitoring system 120 information about changes in at least one electrical parameter of one or more phases of the poly-phase electrical system 104 that provides electrical energy to the electrical device 102. For example, the monitoring system 108 can detect changes in the power factor of the electrical system 104 at or proximate to the location of the sensors 122. In response to the detected changes in power factor, computing device 108 can send a signal to the meter 106 that can cause a change in the operational characteristics of at least one of the one or more electrical apparatus 102.

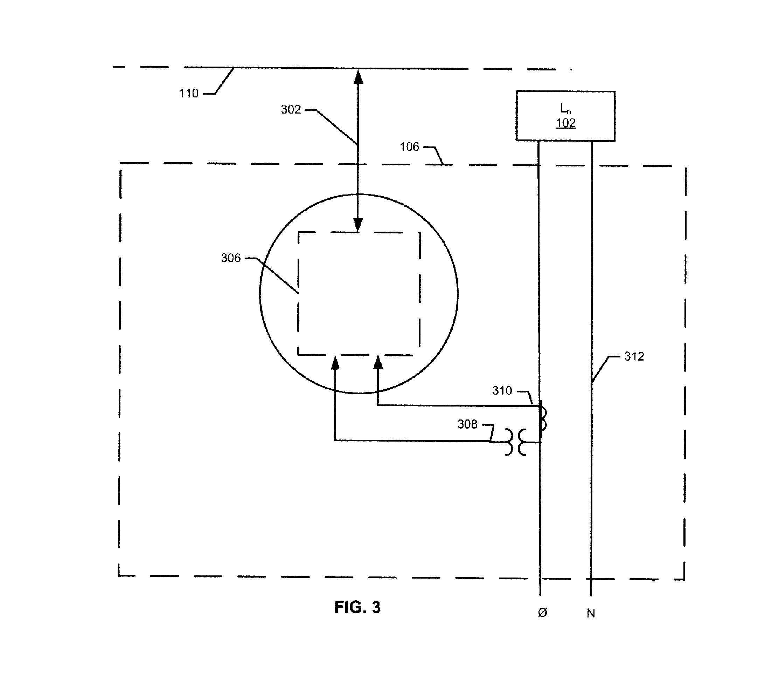

FIG. 3 illustrates an overview block diagram of a non-limiting embodiment of a meter 106 that can be used to practice embodiments of the present invention. In this exemplary embodiment, the utility service is single-phase electric power comprised of at least one phase conductor and a neutral conductor 312, though it is to be appreciated that the embodiments of the invention can be used with single- and poly-phase electrical systems such as two-phase, three-phase, four-phase, etc. Further comprising the embodiment of a meter 106 shown in FIG. 3 are meter's electronics 306. Analog voltage and current inputs are provided to meter electronics 306. In one aspect, the analog signals are derived from the electrical power feed serving the load 102 and the one being metered by the meter 106. In another aspect, the analog signals are derived from a separate electrical source. In one aspect, the analog voltage signal can be provided by one or more potential transformers (PT) 308, if needed, though other means such as a voltage divider, capacitive coupling, or the like can be used. If the voltage level of the source is sufficiently low (e.g., .25 volts AC, or lower), then a PT 308 or other means of stepping down or transforming the voltage can be omitted. Similarly, in one aspect, the analog current signal can be provided by one or more current transformers (CT) 310. In one aspect, the one or more CTs 310 can have a turns ratio of 1:2500. In one aspect, one or more resistors (not shown) can be used to convert the current signal from the CT 310 into a voltage signal. In one aspect, the meter electronics 306 can comprise a memory (not shown in FIG. 3) and other metrology sensors. Generally, in addition to the voltage or current from the PTs 308 and/or the CTs 310 used for sensing and measurement purposes, an isolated power supply id provided that supplies any needed power to the meter electronics. For example, the isolated power supply is used to provide any power needed by the processor, the one or more metrology sensors, and the network interface. However, in embodiments of the present invention, an non-isolated power supply is used, which means that the voltage or current from the PTs 308 can be used to supply an non-isolated power supply that supplies any needed power to the meter electronics. The meter 106 comprises a section of fiber optic cable 302 that interfaces with the network interface of the meter's electronics 306 and connects the meter's electronics 306 with the network. This section of fiber optic cable 302 provides electrical isolation between the meter 106 and the network 110 as the section of fiber optic cable 302 is non-conductive. An optical emitter and receiver are provided as needed to convert electrical signals into light signals for transmission through the fiber optic cable section 302 and to convert light signals to electrical signals for transmission through a conductive network 110.

The memory of the meter's electronics can be used to store, for example, a device identifier that identifies one or more electrical apparatus that comprise the load 102 that can have their operational characteristics altered in accordance with a signal received by the meter electronics 306 over the network 110. In one aspect, the electrical apparatus can be shut down, started, or prevented from operating in accordance with the signal. For example, a signal can be sent to the meter 106 over a network 110. In one aspect, the network 110 is an advanced metering infrastructure (AMI) network.

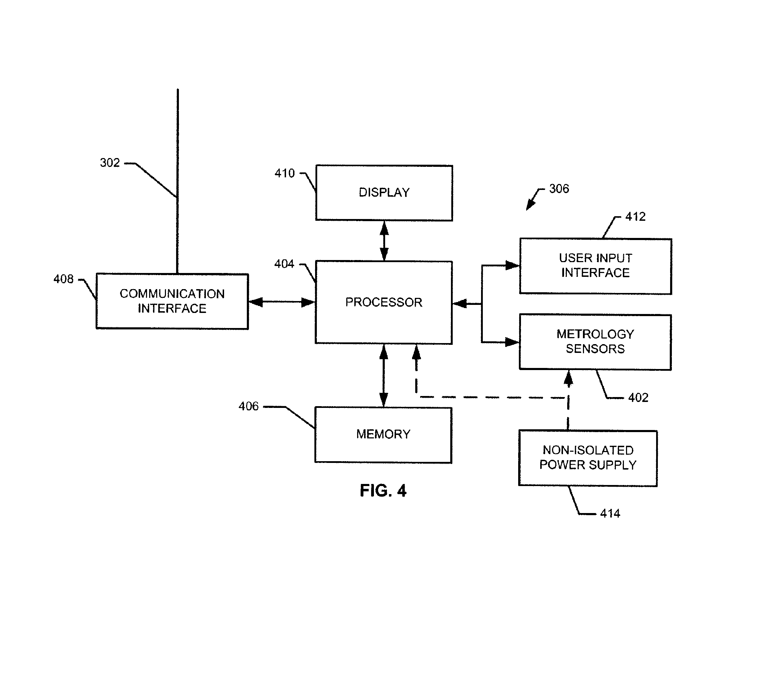

Referring now to FIG. 4, a block diagram of an entity capable of operating as meter electronics 306 is shown in accordance with one embodiment of the present invention. The entity capable of operating as meter electronics 306 includes various means for performing one or more functions in accordance with embodiments of the present invention, including those more particularly shown and described herein. It should be understood, however, that one or more of the entities may include alternative means for performing one or more like functions, without departing from the spirit and scope of the present invention. As shown, the entity capable of operating as meter electronics 306 can generally include means, such as one or more processors 404 for performing or controlling the various functions of the entity. As shown in FIG. 4, in one embodiment, meter electronics 306 can comprise metering components such as metrology sensors 402, which include meter inputs and filtering components. Metrology sensors can be, for example, current transformers (CT), resistive shunts, Rogowski coils, and the like. In one aspect, the meter inputs and filter components can comprise voltage and current inputs, one or more ADCs, filtering components, and the like. Further comprising this embodiment of meter electronics 306 are one or more processors 404 and memory 406.

In one embodiment, the one or more processors 404 are in communication with or include memory 406, such as volatile and/or non-volatile memory that stores content, data or the like. For example, the memory 406 may store content transmitted from, and/or received by, the entity. Also for example, the memory 406 may store software applications, instructions or the like for the one or more processors 404 to perform steps associated with operation of the entity in accordance with embodiments of the present invention. In one aspect, the meter's electronics 306 can comprise one or more metering micro-controllers including a Teridian 6533 controller or a Teridian 6521 controller as are available from Maxim Integrated Products, Inc. (Sunnyvale, California), among others. In one aspect, the one or more processors 404 can perform metering functions such as determining the number of kilowatt-hours (KWH) of electricity consumed by the load 102, kilovolt-amp reactive hours (kVARh), power factor, and the like.

In addition to the memory 406, the one or more processors 404 can also be connected to at least one interface or other means for displaying, transmitting and/or receiving data, content or the like. In this regard, the interface(s) can include at least one communication interface 408 or other means for transmitting and/or receiving data, content or the like, as well as at least one user interface that can include a display 410 and/or a user input interface 412. In one aspect, the communication interface 408 can be used to transfer information stored in the memory 406 to a remote computing device 108 such as the one described herein over a network 110, or to receive a signal form the remote computing device 108. In one aspect, the communication interface connects to the network via a section of fiber optic cable 302. In one aspect, the network 110 is an advanced metering infrastructure (AMI) network. In one aspect, the communication interface 408 can further comprise a wireless communication interface such as a Wi-Fi transceiver or radio that can be used to communicate with electrical apparatus 102 at or proximate to the meter's 106 location. The user input interface 412, in turn, can comprise any of a number of devices allowing the entity to receive data from a user, such as a keypad, a touch display, a joystick or other input device.

Further comprising the embodiment of an entity capable of operating as meter electronics 306 is a non-isolated power supply 414. As shown, the non-isolated power supply can be used to provide power and/or signal source to any of the components that comprise the meter electronics 306, including the processor 404 and the metrology sensors 402. As noted herein, the non-isolated power supply 302 is not electrically isolated from the energy source (e.g. PTs 308, CTs 310) that drives the power supply 402.

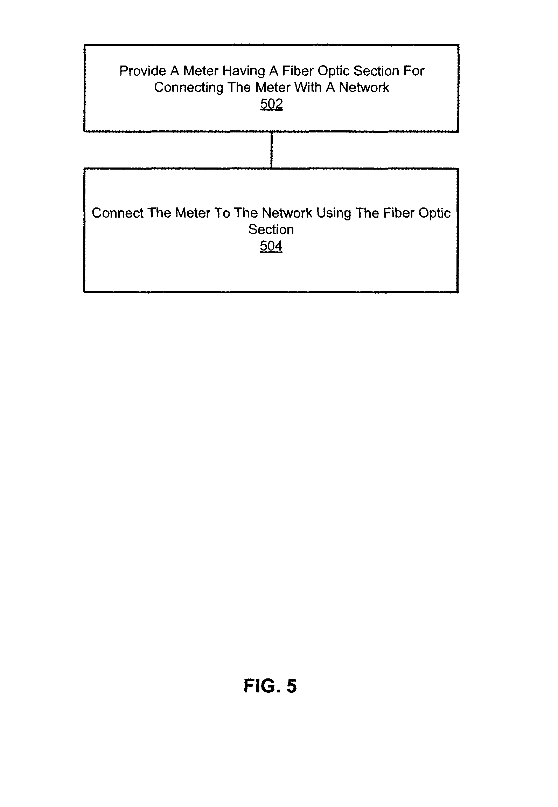

Referring now to FIG. 5, the operations are illustrated that may be taken for connecting a meter to a network. At step 502, a meter having a section of fiber optic cable attached to its network interface is provided. At step 504, the section of fiber optic cable is used to connect the meter to the network.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

Throughout this application, various publications may be referenced. The disclosures of these publications in their entireties are hereby incorporated by reference into this application in order to more fully describe the state of the art to which the methods and systems pertain.

Many modifications and other embodiments of the inventions set forth herein will come to mind to one skilled in the art to which these embodiments of the invention pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A meter (106) comprised of:
one or more metrology sensors (402);
a non-isolated power supply (414);
a processor (404); and
a network interface (408) having a section of fiber optic cable (302),
wherein the processor (404) is operably connected to the one or more metrology sensors (402) and the network interface (408) having a section of fiber optic cable (302),
wherein the non-isolated power supply (414) provides any power used by the processor (404), the one or more metrology sensors (402), and the network interface (408), and
wherein the section of fiber optic cable (302) is used to connect the meter (106) to a network (110).

2. The meter (106) of Claim 1, wherein the network (110) comprises an advanced metering infrastructure (AMI) network.

3. The meter (106) of Claim 1 or Claim 2, wherein the one or more metrology sensors (402) comprise one or more of a current transformer, a resistive shunt, or a Rogowski coil.

4. A system comprised of
a network (110); and
a meter (106), wherein the meter (106) is further comprised of:
one or more metrology sensors (402);
a non-isolated power supply (414);
a processor (404); and
a network interface (408) having a section of fiber optic cable (302),
wherein the processor (404) is operably connected to the one or more metrology sensors (402) and the network interface (408) having a section of fiber optic cable (302),
wherein the non-isolated power supply (414) provides any power used by the processor (404), the one or more metrology sensors (402), and the network interface (408), and
wherein the section of fiber optic cable (302) is used to connect the meter (106) to the network (110).

5. The system of Claim 4, wherein the network (110) comprises an advanced metering infrastructure (AMI) network.

6. The system of Claim 4 or Claim 5, wherein the one or more metrology sensors (402) comprise one or more of a current transformer, a resistive shunt, or a Rogowski coil.

7. A method comprising:
connecting a meter (106) to a network (110), wherein at least a section of the network (110) comprises fiber optic cable (302), said meter (106) comprised of:
one or more metrology sensors (402);
a non-isolated power supply (414);
a processor (404); and
a network interface (408),
wherein the processor (404) is operably connected to the one or more metrology sensors (402) and the network interface (408) having a section of fiber optic cable (302),
wherein the non-isolated power supply (414) provides any power used by the processor (404), the one or more metrology sensors (402), and the network interface (408), and
wherein the section of fiber optic cable (302) is used to connect the meter (106) to the network (110).

8. The method of Claim 7, wherein the network (110) comprises an advanced metering infrastructure (AMI) network.

9. The method of Claim 7 or Claim 8, wherein the one or more metrology sensors (402) comprise one or more of a current transformer, a resistive shunt, or a Rogowski coil.
